# EUROPEAN PATENT APPLICATION

(11) **EP 4 442 861 A1**
(43) Date of publication of application: **09.10.2024**
(21) Application number: 24152523.7
(22) Date of filing: 18.01.2024
(51) Int. Cl.: C25B 1/04, C25B 9/60, C25B 9/75, C25B 9/77, C25B 11/075, C25B 11/031, C25B 15/08, C25B 11/089, C25B 9/23

(54) **ELECTRODE STRUCTURE AND WATER ELECTROLYZER**

(30) Priority: 22.03.2023 JP 2023045865
(71) Applicant: SCREEN Holdings Co., Ltd., Kyoto-shi, Kyoto 602-8585 (JP)
(72) Inventor: KAWAKAMI, Takuto, Kyoto, 602-8585 (JP); ENOMOTO, Yuto, Kyoto, 602-8585 (JP)
(74) Representative: Goddar, Heinz J.

(57) **Abstract**

An electrode structure includes an electrolyte membrane (51), a plurality of anode catalyst particles (611) located on an anode side of the electrolyte membrane (51), a plurality of cathode catalyst particles located on a cathode side of the electrolyte membrane, and a recombination layer (80) located between the electrolyte membrane (51) and the anode catalyst particles (611). The anode catalyst particles are used for electrolyzing water into a hydrogen ion, oxygen, and an electron. The cathode catalyst particles are used for combining the hydrogen ion and the electron with each other to produce hydrogen. If hydrogen generated on the cathode side of the electrolyte membrane (51) permeates into the anode side across the electrolyte membrane (51), the hydrogen having permeated is combined with oxygen to turn into water again in the recombination layer (80). This makes it possible to suppress mixture of hydrogen into oxygen to be output from the anode side.

## Description

### BACKGROUND OF THE INVENTION

### Field of the Invention

The present invention relates to an electrode structure and a water electrolyzer.

### Description of the Background Art

In a solid polymer water electrolyzer conventionally known, hydrogen (H₂) is produced by electrolysis of water (H₂O). The solid polymer water electrolyzer produces hydrogen that is a fuel not to discharge greenhouse gases, so that it has attracted particular attention in recent years as a technique contributive to decarbonization.

The solid polymer water electrolyzer has a cell stack with cells and separators stacked alternately. Each of the cells includes an electrolyte membrane, and a catalyst layer formed on each of both sides of the electrolyte membrane.

During use of the solid polymer water electrolyzer, a voltage is applied between an anode-side catalyst layer and a cathode-side catalyst layer and water is supplied to the anode-side catalyst layer. This causes electrochemical reactions as follows in the anode-side catalyst layer and the cathode-side catalyst layer. As a result, hydrogen is output from the cathode-side catalyst layer.
(anode side)

   2H₂O → 4H⁺ + O₂ + 4e⁻
(cathode side)

   2H⁺ + 2e⁻ → H₂

The conventional solid polymer water electrolyzer is described in Japanese Patent Application Laid-Open No. 2022-023996, for example.

In the solid polymer water electrolyzer, hydrogen ions (H⁺) generated in the anode-side catalyst layer move to the cathode-side catalyst layer through the electrolyte membrane. Thus, to produce hydrogen with higher efficiency, ionic resistance in the electrolyte membrane is desirably reduced by reducing the thickness of the electrolyte membrane.

However, reducing the thickness of the electrolyte membrane may cause part of hydrogen generated in the cathode-side catalyst layer to permeate into the anode side across the electrolyte membrane. This poses a problem of mixture of hydrogen into oxygen to be output from the anode side.

### SUMMARY OF THE INVENTION

The present invention has been made in view of the foregoing circumstances, and is intended to provide an electrode structure and a water electrolyzer capable of suppressing mixture of hydrogen into oxygen to be output from an anode side.

The present invention is intended for an electrode structure comprising: an electrolyte membrane; a plurality of anode catalyst particles located on an anode side of the electrolyte membrane and used for electrolyzing water into a hydrogen ion, oxygen, and an electron; a plurality of cathode catalyst particles located on a cathode side of the electrolyte membrane and used for combining the hydrogen ion and the electron with each other to produce hydrogen; and a recombination layer formed between an anode-side surface of the electrolyte membrane and the anode catalyst particles. The anode catalyst particles contain iridium oxide, an alloy of iridium and ruthenium, or an alloy of iridium and titanium dioxide. The recombination layer contains platinum, iridium, cobalt, or ruthenium.

According to the present invention, if hydrogen generated on the cathode side of the electrolyte membrane permeates into the anode side across the electrolyte membrane, it is possible to combine the hydrogen having permeated with oxygen to turn the hydrogen into water again in the recombination layer. This makes it possible to suppress mixture of hydrogen into oxygen to be output from the anode side.

Preferably, the electrode structure further comprises an anode porous layer stacked on an external side of the recombination layer, and the anode catalyst particles are supported in the anode porous layer.

Thus, a layer of the anode catalyst particles is not provided. This makes it possible to reduce the number of implementations of application processes on the anode-side surface of the electrolyte membrane.

Preferably, the electrode structure further comprises an anode catalyst layer stacked on an external side of the recombination layer; and an anode porous layer stacked on an external side of the anode catalyst layer, and the anode catalyst layer contains the plurality of anode catalyst particles.

Preferably, the anode catalyst particles are supported in the anode porous layer.

Supporting the catalyst particles in the anode porous layer achieves reduction in the thickness of the anode catalyst layer.

The present invention is further intended for a water electrolyzer comprising the electrode structure described above.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic view of a water electrolyzer;
Fig. 2 is a schematic view showing a cell and separators in a pair according to a first preferred embodiment;
Fig. 3 shows a situation where hydrogen crossover occurs in the cell of the first preferred embodiment;
Fig. 4 is a schematic view showing a cell and separators in a pair according to a second preferred embodiment; and
Fig. 5 is a schematic view showing a cell and separators in a pair according to a third preferred embodiment.

### DESCRIPTION OF THE PREFERRED EMBODIMENTS

Preferred embodiments of the present invention will be described below by referring to the drawings.

### <1. First Preferred Embodiment>

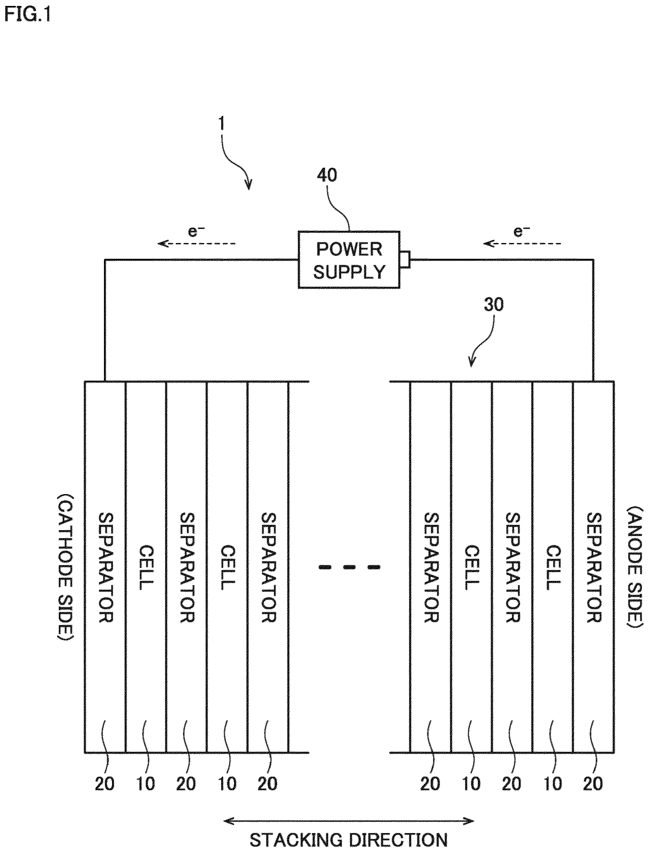

Fig. 1 is a schematic view of a water electrolyzer 1. The water electrolyzer 1 is to produce hydrogen by solid polymer water electrolysis. As shown in Fig. 1, the water electrolyzer 1 includes a cell stack 30 composed of a plurality of cells 10 and a plurality of separators 20, and a power supply 40 that applies a voltage to the cell stack 30. The cells 10 and the separators 20 are stacked alternately to form the cell stack 30. In the following, a direction in which the cells 10 and the separators 20 are stacked will be called a "stacking direction."

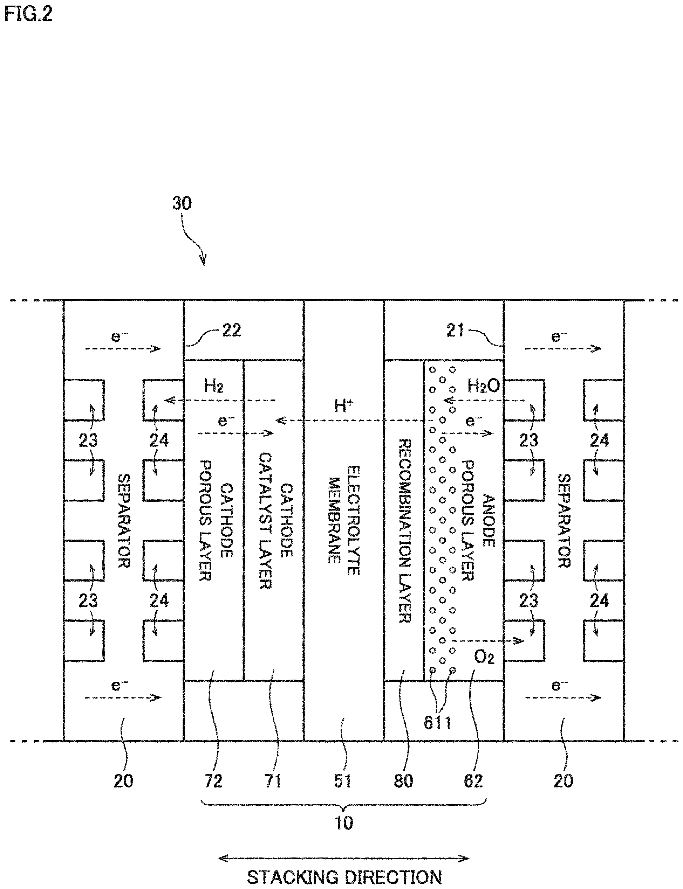

Fig. 2 shows only one cell 10 and separators 20 in a pair arranged on both sides of this cell 10 schematically that form the cell stack 30 of the water electrolyzer 1. As shown in Fig. 2, one cell 10 includes an electrolyte membrane 51, an anode porous layer 62, a cathode catalyst layer 71, a cathode porous layer 72, and a recombination layer 80.

A stacked body composed of the electrolyte membrane 51, the cathode catalyst layer 71, and the recombination layer 80 is called a catalyst-coated membrane (CCM). A stacked body composed of the electrolyte membrane 51, the anode porous layer 62, the cathode catalyst layer 71, the cathode porous layer 72, and the recombination layer 80 is called a membrane-electrode-assembly (MEA). The membrane-electrode-assembly corresponds to an example of an "electrode structure" of the present invention.

The electrolyte membrane 51 is a membrane like a thin plate having ion conductivity (ion-exchange membrane). The electrolyte membrane 51 of the present preferred embodiment is a proton-exchange membrane that conducts hydrogen ions (H⁺). A fluorine-based or hydrocarbon-based polymer electrolyte membrane is used as the electrolyte membrane 51. More specifically, a polymer electrolyte membrane containing perfluorocarbon sulfonic acid is used as the electrolyte membrane 51, for example. The electrolyte membrane 51 has a thickness from 5 to 200 µm, for example.

The anode porous layer 62 is a layer having conductivity and made of a porous material. The anode porous layer 62 is stacked on an external side of the recombination layer 80 (on the opposite side to the electrolyte membrane 51) described later. The anode porous layer 62 is formed using a porous base material made of titanium metal or a titanium alloy, for example. The anode porous layer 62 is also called a porous transport layer (PTL).

As shown in Fig. 2, the anode porous layer 62 contains a plurality of anode catalyst particles 611 supported therein. The anode catalyst particles 611 are catalyst particles for causing electrolysis of water on an anode side of the electrolyte membrane 51. The anode catalyst particles 611 are made of iridium oxide (IrOx), an alloy of iridium (Ir) and ruthenium (Ru), or an alloy of iridium (Ir) and titanium dioxide (TiO₂), for example. Desirably, the anode catalyst particles 611 are supported particularly in a part of the anode porous layer 62 including a surface closer to the recombination layer 80.

During use of the water electrolyzer 1, water (H₂O) is supplied to the anode porous layer 62. The water passes through tiny holes in the anode porous layer 62 to reach the anode catalyst particles 611. Then, the power supply 40 applies a voltage between the anode porous layer 62 and the cathode porous layer 72. By doing so, by the actions of the applied voltage and the anode catalyst particles 611, the water is electrolyzed into hydrogen ions (H⁺), oxygen (O₂), and electrons (e⁻) in the anode porous layer 62.

The cathode catalyst layer 71 is a catalyst layer that causes a reduction reaction on a cathode side. The cathode catalyst layer 71 is formed on a cathode-side surface of the electrolyte membrane 51 (a surface on the opposite side to a surface where the recombination layer 80 is formed). The cathode catalyst layer 71 contains a large number of carbon particles on which cathode catalyst particles are supported. The cathode catalyst particles are catalyst particles for combination between hydrogen ions and electrons. Platinum (Pt) is used as the cathode catalyst particles, for example. Alternatively, the cathode catalyst particles may be prepared by mixing particles of a tiny amount of ruthenium or cobalt into particles of platinum.

During use of the water electrolyzer 1, hydrogen ions (H⁺) and electrons (e⁻) are supplied to the cathode catalyst layer 71. Then, a voltage is applied between the anode porous layer 62 and the cathode porous layer 72 by the power supply 40. By doing so, by the actions of the applied voltage and the cathode catalyst particles, a reduction reaction is caused in the cathode catalyst layer 71 to generate hydrogen gas (H₂) from the hydrogen ions and the electrons.

During manufacture of the catalyst-coated membrane, the carbon particles on which the cathode catalyst particles are supported described above are first mixed with a solvent such as water or alcohol to prepare catalyst ink for cathode. Then, the prepared catalyst ink is applied to the cathode-side surface of the electrolyte membrane 51 and dried. As a result, the cathode catalyst layer 71 is formed on the cathode-side surface of the electrolyte membrane 51.

The cathode porous layer 72 is a layer for transporting electrons from the separator 20 to the cathode catalyst layer 71 and for transporting hydrogen generated in the cathode catalyst layer 71 to the separator 20. The cathode porous layer 72 is also called a gas diffusion layer (GDL).

The cathode porous layer 72 is stacked on an external side of the cathode catalyst layer 71 (on the opposite side to the electrolyte membrane 51). The cathode porous layer 72 has conductivity and is made of a porous material. The cathode porous layer 72 is formed using a porous base material (carbon paper) made of carbon, for example.

The recombination layer 80 is a layer for preventing hydrogen generated in the cathode catalyst layer 71 from being mixed into the anode porous layer 62. The recombination layer 80 is formed on an anode-side surface of the electrolyte membrane 51 (a surface on the opposite side to the surface where the cathode catalyst layer 71 is formed). Specifically, the recombination layer 80 is located between the anode-side surface of the electrolyte membrane 51 and the plurality of anode catalyst particles 611 in the stacking direction.

The recombination layer 80 contains a large number of particles of a recombination catalyst. The recombination catalyst is a catalyst for combining hydrogen and oxygen with each other to produce water. For example, platinum (Pt), iridium (Ir), cobalt (Co), or ruthenium (Ru) is used as the recombination catalyst.

During manufacture of the catalyst-coated membrane, the particles of the recombination catalyst described above are first mixed with a solvent such as water or alcohol to prepare catalyst ink for the recombination layer 80. Then, the prepared catalyst ink is applied to the anode-side surface of the electrolyte membrane 51 and dried. As a result, the recombination layer 80 is formed on the anode-side surface of the electrolyte membrane 51.

The separator 20 is a layer for moving electrons between the cells 10 next to each other and for forming a passage for water, oxygen, and hydrogen. The separator 20 is interposed between the anode porous layer 62 of the cell 10 and the cathode porous layer 72 of the cell 10 next to the former cell 10. The separator 20 has conductivity and is made of a material impermeable to gas and liquid. For example. a metal plate is used as the separator 20.

The separator 20 has an anode surface 21 contacting the anode porous layer 62, and a cathode surface 22 contacting the cathode porous layer 72. The anode surface 21 is provided with a plurality of anode grooves 23. Water is supplied from the outside of the cell stack 30 to the anode porous layer 62 through the anode grooves 23 of the separator 20. Oxygen generated in the vicinity of the anode catalyst particles 611 in the anode porous layer 62 moves from the anode porous layer 62 and is then output to the outside of the cell stack 30 through the anode grooves 23 of the separator 20.

The cathode surface 22 of the separator 20 is provided with a plurality of cathode grooves 24. Hydrogen generated in the cathode catalyst layer 71 passes through the cathode porous layer 72 and is then output to the outside of the cell stack 30 through the cathode grooves 24 of the separator 20.

The power supply 40 is a device that applies a voltage to the cell stack 30. As shown in Fig. 1, the power supply 40 has a positive terminal electrically connected to the separator 20 at an end portion of the cell stack 30 farthest to the anode side. The power supply 40 has a negative terminal electrically connected to the separator 20 at an end portion of the cell stack 30 farthest to the cathode side. The power supply 40 applies a voltage to the cell stack 30 necessary for electrolysis of water.

During use of the water electrolyzer 1, water is supplied from the anode grooves 23 of the separator 20 to the anode porous layer 62. Then, by the actions of a voltage applied from the power supply 40 and the anode catalyst particles 611, the water is decomposed into hydrogen ions, oxygen, and electrons. The hydrogen ions move from the anode porous layer 62 into the cathode catalyst layer 71 through the recombination layer 80 and the electrolyte membrane 51. The oxygen moves from the anode porous layer 62 and is then output to the outside of the cell stack 30 through the anode grooves 23. The electrons move from the anode porous layer 62 and then flow into the adjoining cell 10 through the separator 20.

In the adjoining cell 10, these electrons pass through the cathode porous layer 72 to reach the cathode catalyst layer 71. Then, the hydrogen ions and the electrons are combined with each other to generate hydrogen in the cathode catalyst layer 71. The generated hydrogen moves from the cathode catalyst layer 71 and is then output to the outside of the cell stack 30 through the cathode porous layer 72 and the cathode grooves 24. In this way, hydrogen is produced.

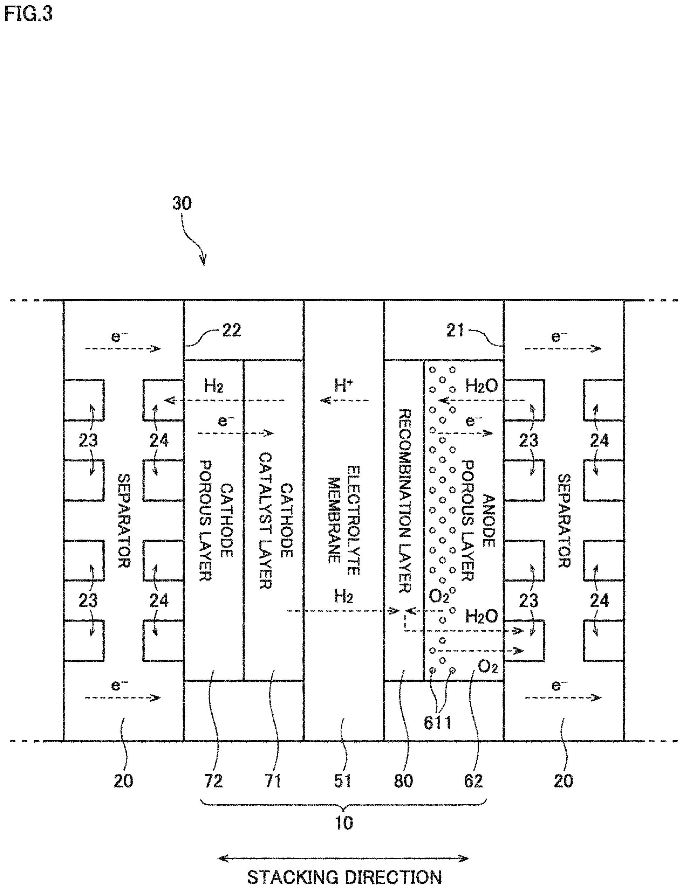

At this time, part of the hydrogen generated in the cathode catalyst layer 71 may permeate into the anode side across the electrolyte membrane 51. This phenomenon is called crossover of the hydrogen. Fig. 3 shows a situation where crossover of the hydrogen occurs in the cell 10 of the present preferred embodiment.

As shown in Fig. 3, the hydrogen having permeated from the cathode catalyst layer 71 into the recombination layer 80 across the electrolyte membrane 51 is combined with oxygen supplied from the anode porous layer 62 by the action of the recombination catalyst. More specifically, the following chemical reaction occurs in the recombination layer 80:

2H₂ + O₂ → 2H₂O

In the recombination layer 80, the hydrogen is combined with oxygen by the foregoing chemical reaction to produce water. This achieves reduction in the amount of hydrogen to be mixed into the anode porous layer 62. Thus, it becomes possible to suppress mixture of hydrogen into oxygen to be output to the outside of the cell stack 30 from the anode porous layer 62.

The water generated in the recombination layer 80 passes through the anode porous layer 62 and the anode grooves 23 and is then output to the outside of the cell stack 30. Part of the water generated in the recombination layer 80 may be decomposed again into hydrogen ions, oxygen, and electrons using the anode catalyst particles 611.

Generally, reducing the thickness of the electrolyte membrane 51 in the stacking direction is likely to cause hydrogen crossover. In this regard, employing the configuration of the present preferred embodiment makes it possible to reduce the thickness of the electrolyte membrane 51 in the stacking direction and to suppress mixture of hydrogen into oxygen to be output from the cell stack 30. Thus, by employing the configuration of the present preferred embodiment, it becomes possible to reduce ionic resistance in the electrolyte membrane 51, thereby increasing efficiency of hydrogen production.

In particular, in the configuration of the present preferred embodiment, the anode catalyst particles 611 are supported in the anode porous layer 62. This eliminates the need for forming a layer of the anode catalyst particles 611 separately from the anode porous layer 62 and the recombination layer 80. Thus, it is not necessary to perform an application process for forming a layer of the anode catalyst particles 611 on the anode-side surface of the electrolyte membrane 51 in addition to the application process for forming the recombination layer 80. As a result, it is possible to reduce the number of implementations of the application processes during manufacture of the catalyst-coated membrane.

### <2. Second Preferred Embodiment>

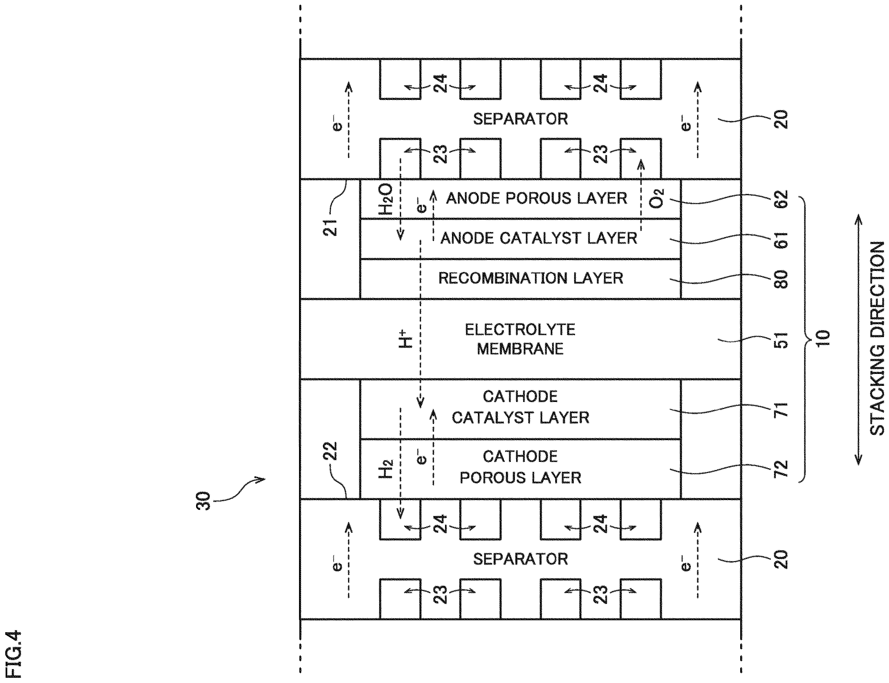

Fig. 4 is a schematic view showing a cell 10 and separators 20 in a pair according to a second preferred embodiment. The following description is mainly intended for a difference from the first preferred embodiment and a point similar to that of the first preferred embodiment will not be described repeatedly.

The cell 10 in Fig. 4 differs from that of the first preferred embodiment described above in that it includes an anode catalyst layer 61. The anode catalyst layer 61 is a layer of an anode catalyst particle 611. The anode catalyst layer 61 is stacked on an external side of the recombination layer 80. The anode porous layer 62 is stacked further on an external side of the anode catalyst layer 61.

The anode catalyst layer 61 contains a large number of the anode catalyst particles 611. The anode catalyst particles 611 are made of iridium oxide (IrOx), an alloy of iridium (Ir) and ruthenium (Ru), or an alloy of iridium (Ir) and titanium dioxide (TiO₂), for example.

During use of the water electrolyzer 1, water is supplied from the anode grooves 23 of the separator 20 to the anode catalyst layer 61 through the anode porous layer 62. Then, a voltage is applied between the anode porous layer 62 and the cathode porous layer 72 by the power supply 40. By doing so, by the actions of the applied voltage and the anode catalyst particles 611, the water is electrolyzed into hydrogen ions (H⁺), oxygen (O₂), and electrons (e⁻) in the anode catalyst layer 61.

The hydrogen ions move from the anode catalyst layer 61 into the cathode catalyst layer 71 through the recombination layer 80 and the electrolyte membrane 51. The oxygen moves from the anode catalyst layer 61 and is then output to the outside of the cell stack 30 through the anode porous layer 62 and the anode grooves 23. The electrons move from the anode catalyst layer 61 and then flow into the adjoining cell 10 through the anode porous layer 62 and the separator 20.

During manufacture of the catalyst-coated membrane, catalyst ink containing the recombination catalyst is first applied to the anode-side surface of the electrolyte membrane 51 and dried. As a result, the recombination layer 80 is formed on the anode-side surface of the electrolyte membrane 51. Next, catalyst ink containing the anode catalyst particles 611 is applied to the external side of the recombination layer 80 and dried. As a result, the anode catalyst layer 61 is formed on the external side of the recombination layer 80.

In the cell 10 in Fig. 4, on the occurrence of crossover of hydrogen, the hydrogen having permeated across the electrolyte membrane 51 is also combined with oxygen to turn into water in the recombination layer 80. This achieves reduction in the amount of hydrogen to be mixed into the anode catalyst layer 61. Thus, it becomes possible to suppress mixture of hydrogen into oxygen to be output to the outside of the cell stack 30. Furthermore, as the thickness of the electrolyte membrane 51 can be reduced in the stacking direction, it is possible to reduce ionic resistance in the electrolyte membrane 51, thereby increasing efficiency of hydrogen production.

### <3. Third Preferred Embodiment>

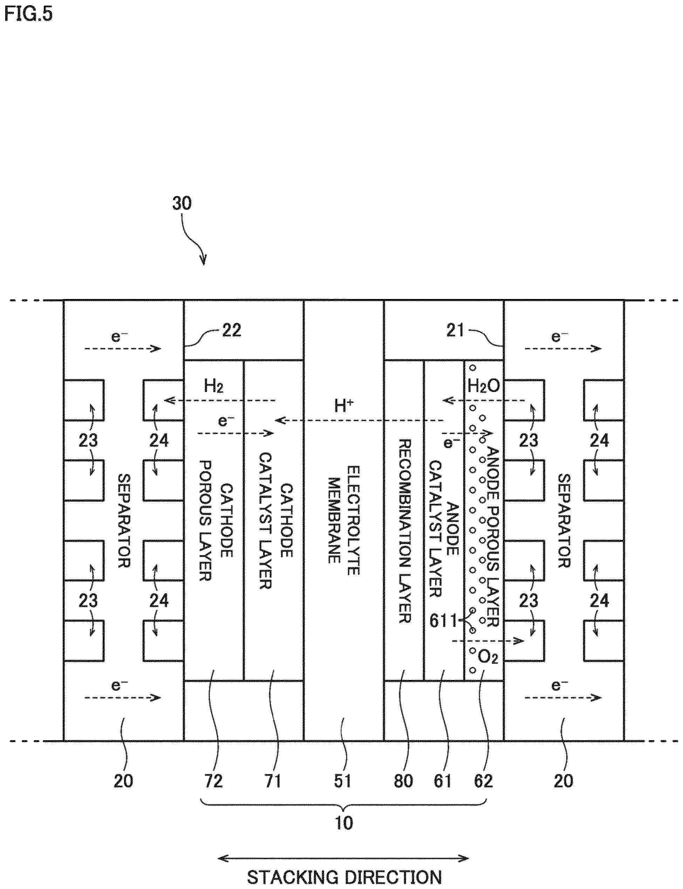

Fig. 5 is a schematic view showing a cell 10 and separators 20 in a pair according to a third preferred embodiment. The following description is mainly intended for a difference from the second preferred embodiment and a point similar to that of the second preferred embodiment will not be described repeatedly.

The cell 10 in Fig. 5 includes the anode catalyst layer 61, and contains a plurality of anode catalyst particles 611 supported further in the anode porous layer 62. Desirably, the anode catalyst particles 611 are supported particularly in a part of the anode porous layer 62 including a surface closer to the anode catalyst layer 61. During use of the water electrolyzer 1, by the action of the anode catalyst particles 611, water is electrolyzed into hydrogen ions (H⁺), oxygen (O₂), and electrons (e⁻) in both the anode catalyst layer 61 and the anode porous layer 62.

Supporting the anode catalyst particles 611 in the anode porous layer 62 achieves reduction in the thickness of the anode catalyst layer 61 in the stacking direction while maintaining the quantity of the anode catalyst particles 611 as a whole. This allows oxygen generated in the anode catalyst layer 61 to flow easily from the anode catalyst layer 61 into the anode porous layer 62. As a result, it becomes possible to diffuse the oxygen with improved performance. Furthermore, the presence of the anode catalyst particles 611 both in the anode catalyst layer 61 and the anode porous layer 62 achieves reduction in electrical contact resistance between the anode catalyst layer 61 and the anode porous layer 62.

### <4. Others>

While the first to third preferred embodiments of the present invention have been described above, the present invention is not limited to the above-described embodiments. All the elements shown in the above-described preferred embodiments or modifications may be combined or some of these elements may be deleted, as appropriate, within a range not causing inconsistency.

While the invention has been shown and described in detail, the foregoing description is in all aspects illustrative and not restrictive. It is therefore understood that numerous modifications and variations can be devised without departing from the scope of the invention.

## Claims

1. An electrode structure comprising:
an electrolyte membrane (51);
a plurality of anode catalyst particles (611) located on an anode side of said electrolyte membrane (51) and used for electrolyzing water into a hydrogen ion, oxygen, and an electron;
a plurality of cathode catalyst particles located on a cathode side of said electrolyte membrane (51) and used for combining said hydrogen ion and said electron with each other to produce hydrogen; and
a recombination layer (80) formed between an anode-side surface of said electrolyte membrane (51) and said anode catalyst particles (611), wherein
said anode catalyst particles (611) contain iridium oxide, an alloy of iridium and ruthenium, or an alloy of iridium and titanium dioxide, and
said recombination layer (80) contains platinum, iridium, cobalt, or ruthenium.

2. The electrode structure according to claim 1, further comprising:
an anode porous layer (62) stacked on an external side of said recombination layer, wherein
said anode catalyst particles (611) are supported in said anode porous layer (62).

3. The electrode structure according to claim 1, further comprising:
an anode catalyst layer (61) stacked on an external side of said recombination layer (80); and
an anode porous layer (62) stacked on an external side of said anode catalyst layer (61), wherein
said anode catalyst layer (61) contains said plurality of anode catalyst particles (611).

4. The electrode structure according to claim 3, wherein
said anode catalyst particles (611) are supported in said anode porous layer (62).

5. A water electrolyzer (1) comprising the electrode structure according to any one of claims 1 to 4.
